# EUROPEAN PATENT SPECIFICATION

(11) **EP 3 156 292 B1**
(45) Date of publication and mention of the grant of the patent: **22.08.2018**
(21) Application number: 16193978.0
(22) Date of filing: 14.10.2016
(51) Int. Cl.: B60S 5/04

(54) **INFLATING DEVICE WITH PRESSURE GAUGE, IN PARTICULAR FOR TYRE INFLATION**
AUFPUMPVORRICHTUNG MIT MANOMETER, INSBESONDERE ZUM AUFPUMPEN VON REIFEN
DISPOSITIF DE GONFLAGE AVEC JAUGE DE PRESSION, NOTAMMENT POUR LE GONFLAGE DE PNEUS

(30) Priority: 16.10.2015 IT UB20155293
(43) Date of publication of application: 19.04.2017
(73) Proprietor: Fini Nuair S.p.A., 10070 Robassomero (IT)
(72) Inventor: BALMA, Roberto, 10070 ROBASSOMERO (IT)
(74) Representative: Giannini, Manuela

(56) References cited:
- WO-A1-2006/095144
- US-A- 5 878 774
- US-A1- 2002 078 754

## Description

The present invention relates to an inflating device provided with a pressure gauge, in particular for tyre inflation. Document US 2002/0078754 A1 discloses an inflating device according to the preamble of claim 1. The refuelling and service stations for motor vehicles, in general, are provided with inflating guns having an inlet permanently connected to a compressor; an outlet provided with a connector to be releasably engaged to an inflation valve of a tyre to be inflated; a pressure gauge for detecting the pressure during inflation; and a manually operable lever to allow pressurized air to flow from the compressor towards said connector.

The need to use the inflating gun as a portable measuring instrument is felt, for detecting tyre pressure by means of the pressure gauge, with sufficient accuracy and without air leakage, also when said gun is not connected to a compressor.

The object of the present invention is to obtain an inflating device provided with a pressure gauge, in particular for tyre inflation, which satisfies the above-described need in a simple and inexpensive manner.

According to the present invention an inflating device, in particular for tyre inflation, is provided, as claimed in the appended claims.

The invention will now be described with reference to the accompanying drawings, which illustrate a non-limiting embodiment, wherein:
Figure 1 illustrates, in section and with parts removed for clarity, a preferred embodiment of the inflating device provided with a pressure gauge, in particular for tyre inflation, according to the present invention; and
Figure 2 is a section along line II-II of Figure 1.

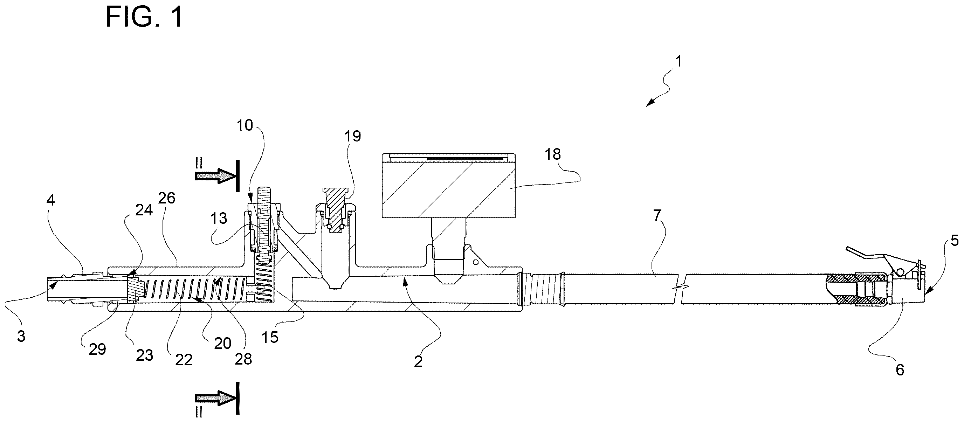

In Figure 1, reference number 1 denotes, as a whole, an inflating device (partly illustrated and in section) comprising a conduit 2 having an inlet 3 defined by a quick coupling connector 4, configured to be coupable to a pressurized air source defined, for example, by a compressor (not illustrated), in particular by means of a piping not illustrated.

The conduit 2 further has an outlet 5 defined by a connector 6, arranged at the end of a flexible piping 7, which delimits an end portion of the conduit 2. The connector 6, known per se and hence not described in detail, is configured to releasably engage an inflating valve of a tyre (not illustrated).

The device 1 further comprises a shutter valve 10, known per se and hence not described in detail, arranged along the conduit 2. The shutter valve 10 is normally closed and comprises a needle 13 movable between a closing position, in which air is prevented from flowing from the inlet 3 to the outlet 5, under the thrust of pressure air coming from the inlet 3, and an opening position, in which pressurized air is allowed to flow from the inlet 3 to the outlet 5 through an orifice.

The shutter valve 10 further comprises at least one elastic member 15 preloaded to such an extent to exert a thrust on the needle 13 towards the closed position, in a concordant direction with air pressure from the inlet 3, and a control member (not illustrated) operable by a user to move the needle 13 in the opening position against the thrust of the elastic member 15 and of air pressure from the inlet 3.

The device 1 further comprises a pressure gauge 18, known per se and hence not described in detail, connected to the conduit 2 at an intermediate point between the shutter valve 10 and the outlet 5.

In particular, the device 1 further comprises an air relief valve 19 arranged along the conduit 2 between the shutter valve 10 and the pressure gauge 18 and operable by a user to release air from the conduit 2 into the environment.

According to the present invention, the device 1 further comprises a check or one-way valve, indicated by the reference number 20, arranged along the conduit 2 between the pressure gauge 18 and the inlet 3, in addition to the shutter valve 10. The check valve 20 is normally closed and comprises an elastic member 22 and a valve shutter 23, which is movable between a forward position, in which it is coupled to a valve seat 24 under the thrust of the preload of the elastic member 22, to prevent air from flowing from the outlet 5 to the inlet 3, and a rearward position, in which it is spaced from the valve seat 24, against the thrust of the elastic member 22, to allow air to flow from the inlet 3 to the outlet 5.

The thrust of the elastic member 22 acts in a direction concordant with air pressure possibly coming from the outlet 5. The opening of the check valve 20 is instead caused by the connection of the inlet 3 with the compressor, since the pressure of the incoming air is sufficient to overcome the thrust of the elastic member 22 and of air pressure possibly coming from the outlet 5, and therefore automatically causes the valve shutter 23 to move in the rearward position.

Advantageously, the check valve 20 is arranged at an end portion 26 of the device 1, between the inlet 3 and the shutter valve 10, so resulting in a simple and compact solution and being simple to assemble. In the case in which the device 1 is configured as an inflating gun with lever actuation, the end portion 26 is defined by a handle of said gun.

Preferably, the valve shutter 23 moves between forward and rearward positions along a rectilinear section 28 of the conduit 2 (and not transversely to the conduit 2), whereby it is not necessary to provide a dedicated seat for the valve shutter 23 in order for it to slide into the end portion 26. At the same time, the elastic member 22 and the valve shutter 23 are relatively easily mountable in the end portion 26, because it is sufficient to insert said components one after the other in the rectilinear section 28 starting from the end of the end portion 26.

In particular, the quick coupling connector 4 has one end 29 that is internal to the end portion 26 and defines the valve seat 24, whereby additional elements are not required to define said valve seat 24.

At the opposite end, the elastic member 22 is arranged against an abutment member 30 having a central opening 31 adapted to allow air from the inlet 3 to flow.

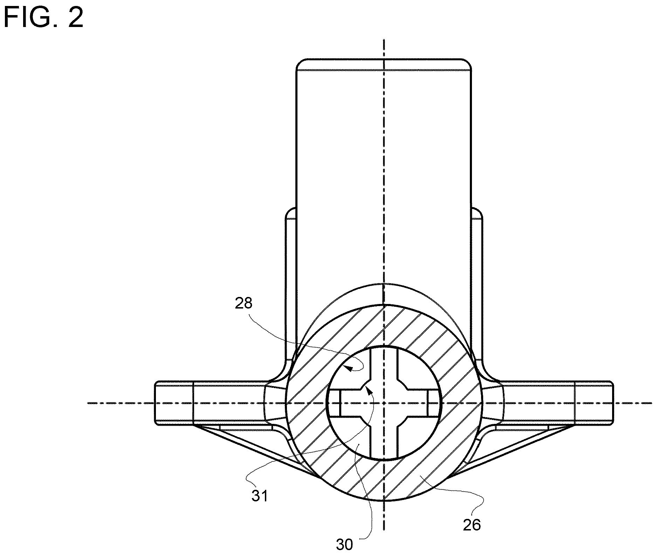

According to a preferred embodiment illustrated in Figure 2, the abutment member 30 is formed by a disc secured to the end portion 26 and the opening 31 has a shape of a cross defined by a central hole coaxial to the end portion 26 and by a plurality of radial holes. This conformation of the opening 31 has the advantage of ensuring a sufficient air flow through the abutment member 30 also in the case in which the inlet air pressure may be so high as to completely compress the elastic member 22 and bring the valve shutter 23 against the abutment member 30.

During use, when the device 1 is not connected to the compressor, the valve seat 24 is closed by the valve shutter 23 due to the thrust of the elastic member 22. When the outlet 5 of the device 1 is connected to a tyre, pressurized air from the tyre may leak into the conduit 2 through the shutter valve 10, but fails to leak into the external environment thanks to the check valve 20, that ensures that, in these operating conditions, there are no air leaks from the tyre.

It follows that it is possible to measure air pressure in the tyre by means of the pressure gauge 18 with sufficient precision, without air leaks and without connecting the device 1 to a compressor.

At the same time, the check valve 20 fails to hinder normal operation of the device 1 when the latter is connected to a compressor. In fact, in these operating conditions, when the shutter valve 10 is opened by a user, air pressure difference between the inlet 3 and the outlet 5 causes the automatic and immediate opening of the check valve 20, which therefore allows air to flow towards the outlet 5 and, hence, into the tyre.

From the other above-described constructional features, it may be appreciated that the addition of the check valve 20 fails to complicate the construction and to increase the overall dimensions of the device 1. In fact, as explained above, it is sufficient to insert the elastic member 22 and the valve shutter 23 in the known solutions, without making other substantial changes with respect to the construction that is normally already provided.

From the above it is, finally, evident that the device 1 described with reference to the attached figures can be subject to modifications and variants which fail to depart from the scope of protection of the claimed invention.

In particular, the position of the shutter valve 20 could be different from that which has been illustrated as a preferred embodiment, and/or the connector member 4 and 6 could have configurations different from those illustrated by way of example.

## Claims

1. An inflating device (1), in particular for tyre inflation, comprising:
- a conduit (2) with an inlet (3) configured to be coupable to a pressurized air source, and an outlet (5) configured to be coupable to an inflating valve;
- a shutter valve (10) arranged to close said conduit (2) and operable by a user to enable pressurized air to flow from said inlet (3) to said outlet (5); and
- a pressure gauge (18) connected to said conduit (2) at an intermediate point between said shutter valve (10) and said outlet (5);
**characterized in that** the inflating device (1) further comprises a check valve (20) separate from said shutter valve (10), arranged between said inlet (3) and said intermediate point of the conduit (2), and configured to prevent air from flowing from said outlet (5) to said inlet (3) and to allow air to flow from said inlet (3) to said outlet (5).

2. A device according to claim 1, wherein said check valve (20) is arranged in an end portion (26) of the device (1), between said inlet (3) and said shutter valve (10).

3. A device according to claim 2, wherein said check valve (20) comprises a valve seat (24) and a valve shutter (23), which is movable between a forward position and a rearward position with respect to said valve seat (24) along a rectilinear section (28) of said conduit (2).

4. A device according to claim 3, further comprising a connector (4) coupled to said end portion (26) and defining said inlet (3); said valve seat (24) is defined by an end (29) of said connector (4).

## Patentansprüche

1. Aufpumpvorrichtung (1), insbesondere zum Aufpumpen von Reifen, Folgendes umfassend:
- ein Rohr (2) mit einem Einlass (3), der konfiguriert ist, um an eine Druckluftquelle koppelbar zu sein, und einen Auslass (5), der konfiguriert ist, um an ein Aufpumpventil koppelbar zu sein;
- ein Verschlussventil (10), das angeordnet ist, das Rohr (2) zu verschließen, und durch einen Benutzer betriebsfähig ist, zu ermöglichen, dass Druckluft von dem Einlass (3) zu dem Auslass (5) strömt; und
- einen Druckmesser (18), der an einem Zwischenpunkt zwischen dem Verschlussventil (10) und dem Auslass (5) mit dem Rohr (2) verbunden ist;
**dadurch gekennzeichnet, dass** die Aufpumpvorrichtung (1) ferner ein Rückschlagventil (20) umfasst, das von dem Verschlussventil (10) getrennt ist, das zwischen dem Einlass (3) und dem Zwischenpunkt des Rohres (2) angeordnet ist, und konfiguriert ist, zu verhindern, dass Luft von dem Auslass (5) zu dem Einlass (3) strömt, und zu ermöglichen, dass Luft von dem Einlass (3) zu dem Auslass (5) strömt.

2. Vorrichtung nach Anspruch 1, wobei das Rückschlagventil (20) in einem Endabschnitt (26) der Vorrichtung (1) zwischen dem Einlass (3) und dem Verschlussventil (10) angeordnet ist.

3. Vorrichtung nach Anspruch 2, wobei das Rückschlagventil (20) einen Ventilsitz (24) und eine Ventilklappe (23), die zwischen einer vorwärts gerichteten Stellung und einer rückwärts gerichteten Stellung bezogen auf den Ventilsitz (24) entlang eines geradlinigen Bereiches (28) des Rohres (2) bewegbar ist, umfasst.

4. Vorrichtung nach Anspruch 3, ferner ein Verbindungsstück (4) umfassend, das an den Endabschnitt (26) gekoppelt ist und den Einlass (3) definiert; wobei der Ventilsitz (24) durch ein Ende (29) des Verbindungsstückes (4) definiert ist.

## Revendications

1. Dispositif de gonflage (1), en particulier pour le gonflage de pneus, comprenant :
- un conduit (2) avec une entrée (3) configurée pour pouvoir être couplée à une source d'air sous pression, et une sortie (5) configurée pour pouvoir être couplée à une soupape de gonflage ;
- une soupape d'obturation (10) agencée pour fermer ledit conduit (2) et qui peut être actionnée par un utilisateur pour permettre à de l'air sous pression de s'écouler de ladite entrée (3) à ladite sortie (5) ; et
- une jauge de pression (18) raccordée audit conduit (2) en un point intermédiaire entre ladite soupape d'obturation (10) et ladite sortie (5) ;
**caractérisé en ce que** le dispositif de gonflage (1) comprend en outre une soupape de retenue (20) séparée de ladite soupape d'obturation (10), agencée entre ladite entrée (3) et ledit point intermédiaire du conduit (2), et configurée pour empêcher l'air de s'écouler de ladite sortie (5) à ladite entrée (3) et permettre à l'air de s'écouler de ladite entrée (3) à ladite sortie (5).

2. Dispositif selon la revendication 1, dans lequel ladite soupape de retenue (20) est agencée dans une partie d'extrémité (26) du dispositif (1) entre ladite entrée (3) et ladite soupape d'obturation (10).

3. Dispositif selon la revendication 2, dans lequel ladite soupape de retenue (20) comprend un siège de soupape (24) et un obturateur de soupape (23), qui est mobile entre une position avant et une position arrière par rapport audit siège de soupape (24) le long d'une section rectiligne (28) dudit conduit (2).

4. Dispositif selon la revendication 3, comprenant en outre un raccord (4) couplé à ladite partie d'extrémité (26) et définissant ladite entrée (3) ; ledit siège de soupape (24) étant défini par une extrémité (29) dudit raccord (4).
